# EUROPÄISCHE PATENTSCHRIFT

(11) **EP 2 339 076 B1**
(45) Veröffentlichungstag und Bekanntmachung des Hinweises auf die Patenterteilung: **20.09.2017**
(21) Anmeldenummer: 10196110.0
(22) Anmeldetag: 21.12.2010
(51) Int. Cl.: E03F 5/22

(54) **Abwassersammelschacht**
Waste water collection shaft
Puits de collecte d'eaux usées

(30) Priorität: 22.12.2009 DE 102009060439
(43) Veröffentlichungstag der Anmeldung: 29.06.2011
(73) Patentinhaber: KSB Aktiengesellschaft, 67227 Frankenthal (DE)
(72) Erfinder: Krüger, Michael, 67281, Kirchheim an der Weinstraße (DE)

(56) Entgegenhaltungen:
- EP-A2- 1 970 660
- AT-B- 412 818
- DD-A1- 223 231
- DE-A1-102006 039 250
- GB-A- 2 440 151

## Beschreibung

Die Erfindung betrifft einen Abwassersammelschacht mit mindestens einem, insbesondere unterhalb der Rückstauebene liegenden, Zulauf, mit einer darin angeordneten Hebeeinrichtung, insbesondere einer Tauchmotorpumpe, mit mindestens einer Ableitung, insbesondere einer Druckleitung, mit einer den Füllstand einer sich im Abwassersammelschacht befindenden Abwassers regelnden Einrichtung, sowie Mitteln zur vereinfachten Montage und Wartung der die Abwasser beeinflussenden Vorrichtungen, sowie ein Verfahren zur Wärmerückgewinnung mit einem Abwassersammelschacht. Aufgrund der Verknappung fossiler Ressourcen besteht ein erhöhter Bedarf an effektiver und ökologisch unbedenklicher Nutzung vorhandener Energiequellen. Ungenutzt bleibt beispielsweise die Wärme von Abwasser, wo im Jahresschnitt Temperaturen von 10 bis 20°C messbar sind. Dieses wird teilweise in Behältern gesammelt, bevor es mittels Hebeanlagen der Kanalisation zugeführt wird.

Um die über das Abwasser abgeführte Wärmeenergie zu nutzen, sind unterschiedliche Lösungen bekannt.

Die DE 10 2005 048 689 B3 beschreibt einen Wärmetauscher zur Abwasserwärmenutzung für Kanalrohre. Dazu wird in den Bodenbereich der horizontal angeordneten Abwasserrohre eine Wärmetauscherfläche integriert. Darüber strömendes Abwasser kann in Abhängigkeit von der Überströmzeit einen Teil seines Wärmegehaltes an die Wärmetauscheroberfläche abgeben.

In einer Veröffentlichung von M. Henze "Wärmerückgewinnung aus dem ungeklärten Abwasser und anderen Umweltwärmequellen für die unabhängige und weitestgehend eigenständige Gebäudeversorgung - Gesamtanlagenkonzeption -", Tec Management, Seligenstadt, aktualisiert am 09.06.2006, ist ein stationärer Wärmetauscher vorgestellt, der von kommunalem Abwasser unter Überdruck langsam durchflossen wird. Diese Anlage sieht gemäß der Abbildung auf Seite 2 einen speziellen Übergabeschacht vor. Dieser besteht aus einem unterhalb der Kanalisation angeordneten Pumpensumpf mit darin angeordneter Abwasserpumpe und einem Zulauf aus der Kanalisation. Die Abwasserpumpe fördert das von extern zugelaufene und damit bereits ausgekühlte Abwasser durch Doppelrohrwärmetauscher, in denen ein Wärmeträgermedium die Abwärme aufnimmt. Zu diesem Zweck ist ebenfalls unterirdisch aber oberhalb des Pumpensumpfes ein großvolumiger begehbarer Systemschacht zur trockenen Aufstellung von einer Vielzahl von großformatigen Doppelrohrwärmetauschern notwendig. Zu diesem nachteiligen bauwerkseitigen Aufwand kommt der weitere Nachteil der seriell und mit Überdruck durchströmten Wärmetauscher. Zur Druckerzeugung ist eine erhebliche Pumpenleistung und damit der zusätzliche Einsatz von Energie erforderlich. Weiterhin sind die innen mit Abwasser durchströmten Doppelrohrwärmetauscher bei Verschmutzung nur mit erhöhtem Aufwand zu reinigen, da es sich hierbei um ein geschlossenes Rohrsystem handelt.

Aus den Schulungsunterlagen "FEKA - Energie aus Abwasser" in der Version 24.10.2006 der Firma FEKA, Bad Ragaz, Schweiz, ist eine Wärmeenergiegewinnungseinrichtung für größere Hotels und kommunale Einrichtungen bekannt. Sie besteht aus einem an die lokalen baulichen Gegebenheiten jeweils anzupassenden Abwasserschacht. Dieser dient als permanenter und ständig gefüllter Abwassersammelbehälter, mit einem daran angepassten integrierten Wärmetauschersystem. Zufließendes Abwasser bedingt im Behälter einen Überlauf und damit einen Flüssigkeitsaustausch im Abwassersammelbehälter. Darin ist ungefähr auf halber Schachthöhe ein wannenartiger Pumpensumpf mit einer darüber angeordneten kegelstumpfförmigen oder zylindrischen Siebvorrichtung vorgesehen. In das Innere dieser Siebvorrichtung wird Abwasser eingeleitet, dessen Feststoffanteile im geschlossenen Teil des Pumpensumpfes verbleiben und vom Sieb zurückgehalten werden. Durch das Sieb vorgereinigtes Abwasser strömt in den Abwassersammelbehälter und kann zur Wärmerückgewinnung genutzt werden. Im Pumpensumpf befindet sich eine Spülpumpe, die, infolge täglicher Förderperioden, die im Pumpensumpf angesammelten Feststoffe in die Kanalisation fördert und gleichzeitig die Siebkonstruktion rückspült. Nur wenn die Zulaufmenge zum Abwassersammelbehälter größer ist als dessen freie Ablaufmenge, verhindert eine Niveauregelung ein Überlaufen, indem die Spülpumpe die größere Zulaufmenge direkt in die Kanalisation fördert. Der Nachteil ist, dass der Sammelbehälter oberhalb der Rückstauebene angeordnet sein muss. GB-A-2 440 151 offenbart eine Abwassersammelschacht gemäß dem Oberbegriff des Anspruchs 1, wobei der Wärmetauscher am Deckel des Schachtes befestigt ist.

Der Erfindung liegt die Aufgabe zugrunde, einen Abwassersammelschacht weiterzuentwickeln, wobei eine wenig aufwändige Vorrichtung zur Rückgewinnung der Restwärme von Abwasser bereitgestellt werden soll, die auch bei vorhandenen Einrichtungen eine Nutzung der vorhandenen Restwärme mit hoher Effizienz ermöglicht. Die Lösung dieses Problems sieht einen Abwassersammelschacht mit den Merkmalen des Anspruchs 1 vor. Diese Anordnung ermöglicht eine Rückgewinnung der Restwärme von Abwasser mit einfachen technischen Mitteln. Insbesondere bei der Integration in bereits bestehende oder geplante Abwassersammelschächte ist kein wesentlicher technischer Aufwand nötig, um die Restwärme aus dem Abwasser zu entziehen. Die Wärmerückgewinnung kann auf verschiedene Arten erfolgen. Als Wärmeträgermedium kann im einfachsten Fall Wasser vorgesehen sein. Dieses wird erwärmt und direkt an eine Entnahmestelle geleitet.

In einer weiteren Ausführungsform ist in dem Wärmetauscher ein Wärmeträgermedium vorgesehen. Dies hat den Vorteil, dass der Wärmeübertrag verbessert ist. Wärmeträgermedien können gezielt auf die Bedingungen am Wärmetauscher abgestimmt werden. Faktoren wie Verweilzeit des Wärmeträgermediums im Wärmetauscher, relativer Temperaturgradient zwischen Abwasser und Wärmeträgermedium oder Absoluttemperaturen am Einsatzort beeinflussen die Wahl des Wärmeträgermediums entscheidend.

In einer weiteren vorteilhaften Ausführungsform wird das Wärmeträgermedium einer Wärmepumpe zugeführt. Von Vorteil ist dabei, dass die aufgenommene thermische Energie in verdichteter Form weitergegeben werden kann, wodurch die Nutzung verbessert ist.

Zur Entnahme der Wärme aus dem Abwassersammelschacht wird ein patronenförmiger Wärmetauscher verwendet. Ein patronenförmiger Wärmetauscher ist prinzipiell aus der DD 223 231 A1 bekannt. Dort besteht er jedoch aus einem lang gestreckten Doppelrohr, das in einen Abwasserbehälter eingesetzt wird. Die durch das Doppelrohr gebildete Fließstrecke ist in Relation zur Ausdehnung des Wärmetauschers sehr kurz, wodurch die Übertragung der Wärme stark beschränkt ist. In einer Ausführung der hier vorgestellten Erfindung, die besonders einfach und kostengünstig zu realisieren ist, besteht der Wärmetauscher für die Anwendung in einem Abwassersammelschacht aus einem Verbundteil aus mindestens einem Wellrohr und einem eingeschobenen Kernteil. Insbesondere die Verwendung eines Wendelwellrohres erweist sich als günstig. Wird in das Wendelwellrohr ein Kernteil eingeführt, dessen Durchmesser in etwa dem Innendurchmesser des Wendelwellrohres entspricht, so erhält man auf einfache Weise einen spiralförmig um das Kernteil verlaufenden Kanal, in dem ein Wärmeträgermedium geführt werden kann. Dieser lange Kanal ermöglicht eine lange Kontaktzeit zwischen dem Wärmeträgermedium und dem umgebenden Abwasser und begünstigt eine turbulente Strömung des Wärmeträgermediums, was einen besonders guten Wärmeübergang zur Folge hat. Wird das Wendelwellrohr aus nicht rostendem Stahl ausgeführt, so erreicht man einen guten Wärmedurchgang bei gleichzeitig sehr gutem Korrosionsschutz und sehr hoher mechanischer Stabilität. Die beiden Enden des so entstandenen Wärmetauschers sind mit Deckeln versehen, die mit dem Wellrohr flüssigkeitsdicht verbunden sind. Hierdurch entsteht ein patronenförmiger Wärmetauscher, der vorwiegend in vertikaler Lage eingesetzt wird. Die Anschlüsse für das Wärmeträgermedium können an einem Ende des Wärmetauschers vorgesehen werden, vorzugsweise am oberen Ende. Somit kann das Wellrohr unbearbeitet bleiben und die Anschlüsse können in den Deckel eingearbeitet werden, wobei ebene Flächen und gegebenenfalls dickeres Material die mechanische Stabilität verbessern und die Abdichtung der Anschlüsse erleichtern. Zusätzlich kann bei dem Wärmetauscher das Wellrohr oder das wahlweise verwendete Wendelwellrohr mit einer Beschichtung oder Umhüllung versehen sein. Dieser Schutz verhindert die Korrosion des Wärmetauschers unter den vorliegenden rauen Umgebungsbedingungen, da der Wärmetauscher dem stetigem Wechsel zwischen einem befüllten und leeren Abwassersammelschacht ausgesetzt ist. Außerdem wird durch eine geeignete Beschichtung ein Anhaften von Feststoffen am Wärmetauscher vermindert. Gemäß der Erfindung ist der oder sind die Wärmetauscher in dem Behälter mit einer Verankerung verbunden, wobei die Verbindung lösbar ausgeführt ist. Die Verankerung kann in einer weiteren Ausführung so ausgestaltet sein, dass eine vereinfachte Montage und Wartung des Wärmetauschers möglich ist. Dadurch können der oder die Wärmetauscher zu Wartungszwecken aus dem Behälter einfach entfernt werden. Abhängig von der Ausgestaltung des Behälters bietet es sich an, die Verankerungsvorrichtung entlang des Umfangs der Behälterwand vorzusehen. Von Vorteil ist dabei, dass der Zugang durch den zentralen Bereich des Behälters frei bleibt. Die Verbindung zwischen Wärmetauscher und Verankerungsvorrichtung ist vorteilhafterweise fernentriegelbar, um ein Herausnehmen des Wärmetauschers zu Wartungszwecken zu ermöglichen, ohne den Behälter zu besteigen. Beispielsweise bietet es sich an, die Versorgungsleitungen des Wärmetauschers als Mittel zum Lösen des Wärmetauschers aus der Verankerung auszubilden. Der Wärmetauscher verfügt ohnehin über Leitungen, die eine Wärmeträgerflüssigkeit transportieren. Es hat sich als zweckmäßig erwiesen, diese Leitungen so auszuführen, dass man den Wärmetauscher an ihnen nach oben aus dem Behälter entfernen kann. Eine Zugentlastung der Anschlüsse wird durch die Verwendung einer geeigneten Kombination aus Versorgungsleitungen und Deckel hergestellt. Um Wärmeverluste an den Versorgungsleitungen zu verhindern, werden diese vorteilhafterweise zumindest im Rücklauf mit einer Wärmeschutzisolierung versehen.

Die Effizienz der Wärmerückgewinnung kann durch die Überwachung des Abwassers gesteigert werden. Speziell eine Verwendung von Füllstands- und/oder Temperatursensoren ermöglicht die Abschätzung des Rückgewinnungspotenzials. Der Einsatz zusätzlicher Energie zur Gewinnung der Restwärme kann dadurch gezielt nur dann erfolgen, wenn eine ausreichende Menge warmen Abwassers im Behälter vorhanden ist. Hierfür ist in einer Ausführungsform eine Steuervorrichtung zur Auswertung der Sensorsignale vorgesehen, die anhand der Messdaten das vorhandene Potenzial ermittelt. Von Vorteil ist dabei, dass die potenziell rückgewinnbare Wärmemenge ermittelt werden kann.

Der hier beschriebene Aufbau einer Vorrichtung zur Rückgewinnung von Restwärme aus Abwasser lässt sich in bereits vorhandene Abwassersammelbehälter von Hebeanlagen nachrüsten. Dies hat den Vorteil, dass ohne großen Aufwand ein erhebliches Potenzial zur Einsparung von Primärenergie genutzt werden kann.

Ein erfindungsgemäßes Verfahren für die Wärmerückgewinnung mit einem erfindungsgemäßen Abwassersammelschacht sieht vor, dass der Füllstand des Abwassers mit einem Sensor gemessen und einer regelnden Einrichtung zugeführt wird. Von der regelnden Einrichtung wird aus der Proportionalität zwischen Abwassermenge und darin enthaltener rückgewinnbarer Wärmemenge das Wärmerückgewinnungspotenzial ermittelt. Bei ausreichend hohem Füllstand, also ausreichendem Potenzial wird das Wärmeträgermedium durch den Wärmetauscher geleitet. Bei Unterschreiten eines Minimalfüllstandes, also bei zu geringem Potenzial, wird der Betrieb des Wärmetauschers von der regelnden Einrichtung unterbrochen. Dies kann durch Abschalten, Unterbrechen oder Umleiten des Wärmeträgerkreislaufes erfolgen. Da für die Rückgewinnung der Wärme zunächst weitere Energie zum Betrieb des Wärmetauschers eingesetzt werden muss, ist die Prüfung des Potenzials wesentlich für die Steigerung der Effizienz bei der Rückgewinnung. Von Vorteil ist dabei, dass der Einsatz der für die Rückgewinnung notwendigen Energie gezielt erfolgt.

In einer weiteren vorteilhaften Ausführung wird bei dem Verfahren zur Wärmerückgewinnung die Temperatur des Abwassers mit einem Sensor gemessen und der regelnden Einrichtung zugeführt. Von der regelnden Einrichtung wird bei ausreichend hoher Temperatur der Betrieb des Wärmetauschers eingeschaltet, oder, es wird bei Unterschreiten einer Mindesttemperatur der Betrieb des Wärmetauschers von der regelnden Einrichtung abgeschaltet. Von Vorteil ist dabei, dass dann, wenn dem vorhandenen Abwasser bereits der wesentliche Teil der enthaltenen Wärme entzogen wurde, die Wärmerückgewinnung durch die Wärmetauscher gestoppt werden kann, um den weiteren Einsatz von Energie zu reduzieren.

Weitere Ausführungsformen ergeben sich aus der Kombination der bisher dargestellten und sind deshalb hier nicht weiter ausgeführt.

Ausführungsbeispiele der Erfindung sind in den Zeichnungen dargestellt und werden im Folgenden näher beschrieben. Es zeigen die
- Figur 1: einen Abwassersammelbehälter gemäß dem Stand der Technik, die
- Figur 2: eine Anordnung von Wärmetauschern, die
- Figur 3: die Draufsicht auf die Verankerung der Wärmetauscher, die
- Figur 4: die Anordnung eines Wärmetauschers in einer Detailansicht und die
- Figur 5: einen Schnitt durch den Wärmetauscher.

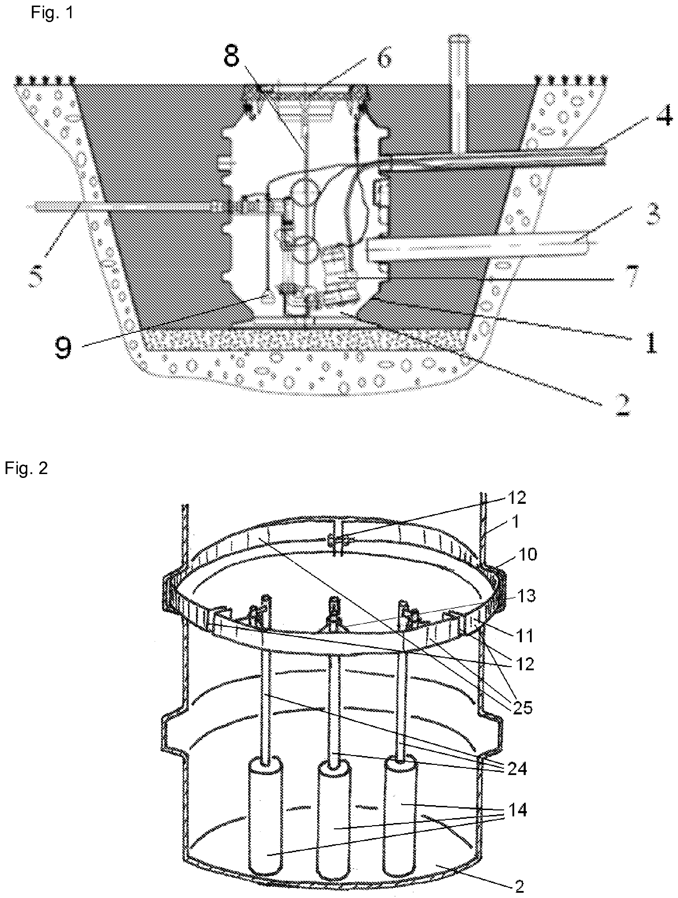

Die Figur 1 zeigt beispielhaft einen Abwassersammelbehälter gemäß dem Stand der Technik. Ein Behälter 1 zu Sammeln von unter der Rückstauebene anfallendem Abwasser verfügt über einen Sumpfbereich 2, in dem sich über einen Abwasserzulauf 3 eingeleitetes Abwasser ansammelt. Der Abwasserzulauf 3 liegt unterhalb der Rückstauebene. Das eingeleitete häusliche Abwasser wird im Behälter 1 gesammelt, bis ein maximaler Füllstand erreicht ist, dann wird das Abwasser mittels einer Tauchmotorpumpe 7 durch eine Druckleitung 5 der Kanalisation zugeführt. Elektrische Leitungen für die Tauchmotorpumpe 7 und einen Sensor 9 zur Füllstandsmessung werden durch einen Versorgungskanal 4 geführt. Der Abwassersammelbehälter 1 ist unterirdisch eingebaut, wobei er für Wartungsarbeiten über einen Zugang 6 verfügt. Die Tauchmotorpumpe 7 kann durch ein Zugmittel 8 von oben aus dem Behälter 1 entnommen werden.

Anlagen dieser Art kommen immer dann zum Einsatz, wenn Abwasser unterhalb der Rückstauebene anfällt, oder kein ausreichendes Gefälle zwischen der Quelle des Abwassers und dem ableitenden Kanalisationssystem vorhanden ist. Der Behälter 1 kann nur bis zur Höhe des Abwasserzulaufs 3 mit frei zufließendem Abwasser gefüllt werden.

Die Figur 2 zeigt eine erfindungsgemäße Anordnung von Wärmetauschern 14 innerhalb des Behälters 1. An der Innenwand des Behälters ist eine Verankerung 11 vorgesehen, die zur einfachen Montage im vorgestellten Ausführungsbeispiel aus drei Segmenten 25 besteht. Diese Segmente 25 sind an Verbindungen 12 miteinander verschraubt. Die Verankerung 11 stützt sich an der Wand des Behälters ab, wobei sie in vorteilhafter Weise in einer Ausbuchtung 10 des Behälters vorgesehen ist, um ein vertikales Verrutschen zu verhindern. Erfindungsgemäß ist die Verankerung 11 im trockenen Bereich des Behälters 1 oberhalb des Abwasserzulaufs 3 angebracht. Dies vermeidet unnötige Verschmutzung der Verankerung 11. Je nach Platzangebot können mehrere Wärmetauscher 14 an der Verankerung 11 befestigt werden. Der verfügbare Raum wird durch die Anordnung der Pumpe, sowie durch die Lage des Abwasserzulaufs 3 eingeschränkt. Um die Wärmetauscher 14 effektiv im Abwasser zu platzieren, sind Abstandhalter 13 vorgesehen, die eine günstige Verteilung über den verfügbaren Raum ermöglichen. Eine Leitung 24 verbindet jeweils einen Wärmetauscher 14 mit der Verankerung 11. Diese Leitung 24 kann starr oder flexibel ausgeführt sein. Insbesondere bei der Verwendung mehrerer Wärmetauscher kann es sinnvoll sein, einen Teil der Leitungen 24 flexibel zu gestalten. Werden zusätzlich die Dichte der Wärmetauscher 14 so gewählt, dass diese im Abwasser schwimmen, so können die Wärmetauscher 14, die an flexiblen Leitungen 24 befestigt sind mit steigendem Füllstand im Abwasser aufsteigen. Somit kann eine gleichmäßige Verteilung der Wärmetauscher 14 auf den gesamten zur Verfügung stehenden Raum erreicht werden. Dies verbessert die Wärmerückgewinnung.

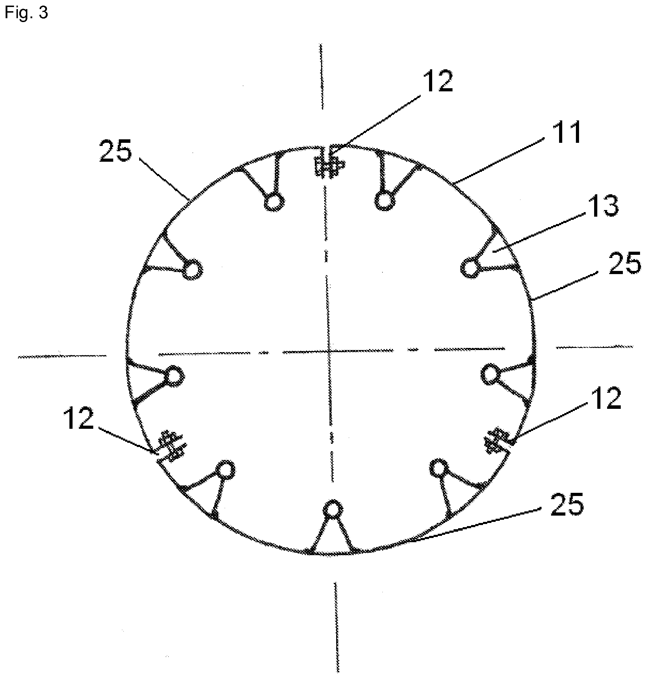

Die Figur 3 zeigt eine Draufsicht auf die Verankerung 11, wobei der Behälter 1 und die Wärmetauscher 14 zur Vereinfachung der Darstellung nicht gezeigt sind. Gezeigt ist der Aufbau der Verankerung 11, die als ringförmiges Teil ausgebildet ist. Zur einfachen Montage, vor allem in einem bereits bestehenden Behälter 1, ist die ringförmige Verankerung 11 in drei Segmente 25 unterteilt, die in die in Figur 2 dargestellte Ausbuchtung 10 eingebracht und durch die Verbindungen 12 befestigt werden. In der dargestellten Form sind die Wärmetauscher 14 gleichmäßig entlang des Umfangs an identischen Abstandhaltern 13 angebracht. Diese Anordnung wird gewählt, wenn der zentrale Bereich in der Mitte des Sumpfbereiches 2 des Behälters 1 durch die Tauchmotorpumpe 7 und die Druckleitung 5 eingenommen wird. Für Systeme, bei denen der zentrale Bereich nicht durch eine Pumpe eingenommen wird, können die Positionen der einzelnen Wärmetauscher 14 durch Abstandhalter 13 mit unterschiedlicher Länge gewählt werden.

Die hier dargestellte Form der Verankerung 11 wird insbesondere für die Nachrüstung bestehender Behälter vorgeschlagen. Bei neu hergestellten Behältern kann die Verankerung 11 samt Abstandhalter 13 bereits in die Behälterinnenwand integriert sein.

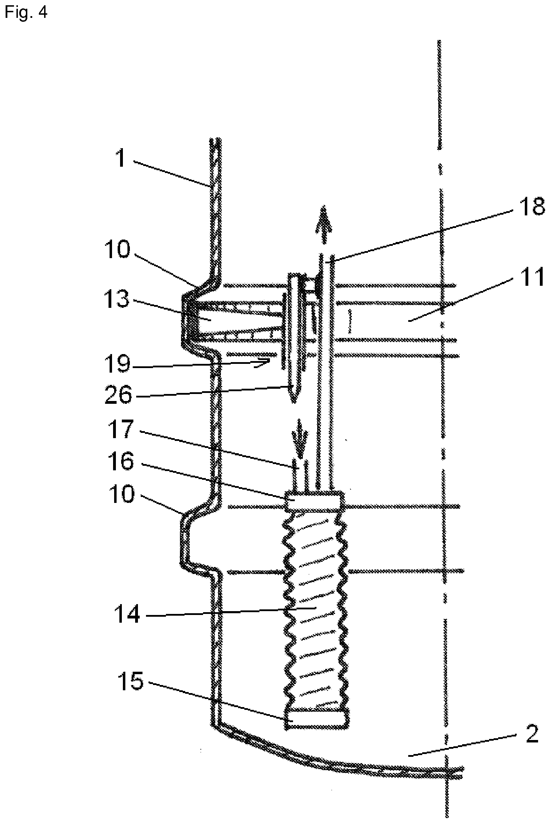

Die Figur 4 zeigt die Befestigung eines Wärmetauschers 14 in Detailansicht. Die Verankerung 11 ist in der Ausbuchtung 10 des Behälters 1 befestigt. An der Verankerung 11 befindet sich der Abstandhalter 13, an dem sich eine Vorrichtung zur lösbaren Verbindung 19 befindet. Der dargestellte Wärmetauscher 14 zeigt einen unteren Deckel 15 und einen oberen Deckel 16, an dem ein Zulauf für das Wärmeträgermedium 17 und ein Rücklauf des Wärmeträgermediums 18 dicht schließend angebracht sind. Die beiden Leitungen 17 und 18 sind als stabile Rohre ausgeführt, wobei in der Figur beispielhaft gezeigt ist, dass an der Rücklaufleitung 18 ein Teil der lösbaren Verbindung 19 befestigt ist.

Die lösbare Verbindung 19 besteht aus einem Dorn 26, der mit dem Wärmetauscher 14 verbunden ist. Dieser Dorn 26 wird in eine Hülse am Ende des Abstandhalters 13 eingeführt. Diese Steckverbindung lässt sich einfach lösen, indem man den Wärmetauscher 14 an der Zuleitung 18 nach oben zieht. Somit erhält man die Möglichkeit den Wärmetauscher 14 vom Zugang 6 aus zu entfernen oder einzusetzen, ohne dabei den Behälter 1 zu betreten.

Eine weitere Ausführung der lösbaren Verbindung 19 kann durch einen Rastmechanismus erweitert sein, der ein unerwünschtes Lösen der Verbindung durch Auftrieb verhindert. Außerdem ist die erfindungsgemäße Anordnung der Wärmetauscher 14 im Behälter 1 nicht auf eine senkrechte Einbaulage beschränkt. Insbesondere bei geringem Füllstand kann es vorteilhaft sein, die Wärmetauscher schräg im Sumpfbereich 2 des Behälters 1 zu platzieren.

In der Figur nicht dargestellt ist eine mögliche Wärmeschutzisolierung an den Zu- und Rücklaufleitungen 17 und 18 des Wärmeträgermediums, die ein mögliches Auskühlen des Wärmeträgermediums verhindert.

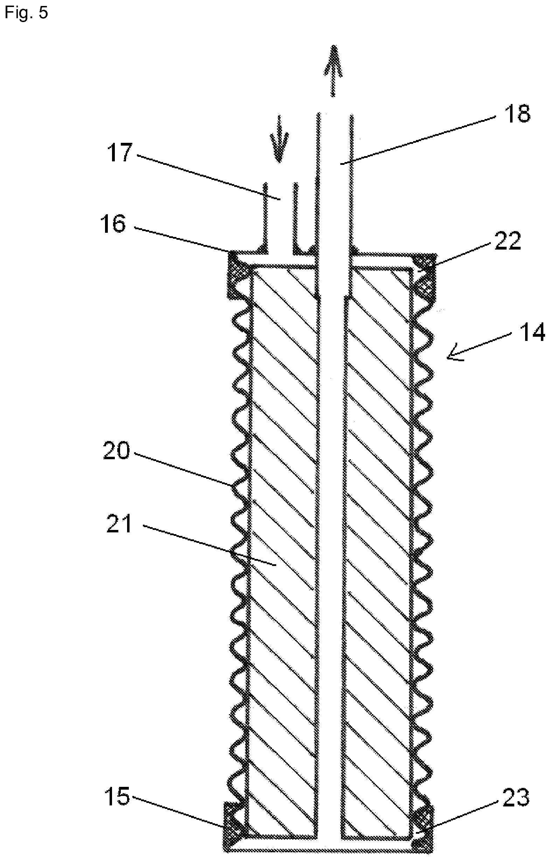

Der Wärmetauscher 14, ist in der Figur 5 im Detail dargestellt. Die äußere Hülle des Wärmetauschers 14 besteht aus einem Wendelwellrohr 20, das aus einem korrosionsbeständigen Material hergestellt ist. Die Oberfläche des Wendelwellrohres 20 ist so ausgestaltet, dass die Verschmutzung durch das umgebende Abwasser vermindert ist. In dieses Wendelwellrohr 20 ist passgenau ein Kernteil 21 eingeführt, dessen Außendurchmesser in etwa dem Innendurchmesser des Wendelwellrohres 20 entspricht. Somit entsteht an der Außenseite des Wärmetauschers 14 ein spiralförmig umlaufender Kanal, durch den das Wärmeträgermedium geleitet wird.

Am oberen Ende des Wärmetauschers 14 sind in den oberen Deckel 16 die Anschlüsse für den Zulauf des Wärmeträgermediums 17 sowie für den Rücklauf des Wärmeträgermediums 18 dicht eingearbeitet. Das Wärmeträgermedium strömt durch den Zulauf 17 in den Wärmetauscher 14 und wird in dem Bereich zwischen Kernteil 21 und oberem Deckel 16 in den Kanal zwischen Wendelwellrohr 20 und Kernteil 21 geleitet. Im rechten Teil des oberen Deckels 16 ist der Bereich eines oberen Anschlusses 22 dargestellt. Dort fließt das Wärmeträgermedium entlang der Innenwand des Wendelwellrohres 20, um die Wärme des umgebenden Abwassers aufzunehmen. Am unteren Ende des Wärmetauschers ist ebenfalls rechts der Bereich eines unteren Anschlusses 23 dargestellt, an dem das Wärmeträgermedium aus dem Kanal zwischen Wendelwellrohr 20 und Kernteil 21 austritt und über den Bereich zwischen dem unteren Deckel 15 und dem Kernteil 21 der Leitung für den Rücklauf des Wärmeträgermediums 18 zugeführt wird. Die Verbindung zwischen den Deckeln 15 und 16 und dem Wendelwellrohr 20 kann durch Schweißen, Kleben, Bördeln oder eine vergleichbare druckdichte Verbindung ausgeführt sein.

### Bezugszeichenliste

1. Behälter
2. Sumpfbereich
3. Abwasserzulauf
4. Versorgungskanal
5. Druckleitung
6. Zugang
7. Tauchmotorpumpe
8. Zugmittel
9. Sensor
10.Ausbuchtung
11. Verankerung
12. Verbindung
13. Abstandhalter
14. Wärmetauscher
15. unterer Deckel
16. oberer Deckel
17. Zulauf für Wärmeträgermedium
18. Rücklauf für Wärmeträgermedium
19. Iösbare Verbindung
20. Wendelwellrohr
21. Kernteil
22. Bereich des oberen Anschlusses
23. Bereich des unteren Anschlusses
24. Leitung
25. Segment
26. Dorn

## Patentansprüche

1. Abwassersammelschacht mit mindestens einem, insbesondere unterhalb der Rückstauebene liegenden, Zulauf (3), mit einer darin angeordneten Hebeeinrichtung, insbesondere einer Tauchmotorpumpe (7), mit mindestens einer Ableitung, insbesondere einer Druckleitung (5), mit einer den Füllstand des sich im Abwassersammelschacht befindenden Abwassers regelnden Einrichtung, sowie Mitteln (8) zur vereinfachten Montage und Wartung der das Abwasser beeinflussenden Vorrichtungen, wobei innerhalb des Abwassersammelschachts eine Vorrichtung zur Rückgewinnung der Restwärme des Abwassers vorgesehen ist, wobei im Bereich unterhalb eines vorgegebenen maximalen Füllstandes mindestens ein Wärmetauscher (14) vorgesehen ist, wobei oberhalb des maximalen Füllstandes angeordnete Haltemittel den oder die Wärmetauscher (14) halten, **dadurch gekennzeichnet, dass** die Haltemittel eine an der Innenwand des Abwassersammelschachts vorgesehene Verankerung (11) aufweisen, an der der Wärmetauscher (14) mittels einer lösbaren Verbindung (19) befestigbar ist.

2. Abwassersammelschacht nach Anspruch 1, **dadurch gekennzeichnet, dass** in dem Wärmetauscher (14) ein Wärmeträgermedium vorgesehen ist.

3. Abwassersammelschacht nach einem der Ansprüche 1 oder 2, **dadurch gekennzeichnet, dass** das Wärmeträgermedium einer Wärmepumpe zugeführt wird.

4. Abwassersammelschacht nach einem der Ansprüche 1 bis 3, **dadurch gekennzeichnet, dass** der Wärmetauscher (14) aus einem Verbundteil aus mindestens einem Wellrohr, insbesondere einem Wendelwellrohr (20), und einem eingeschobenen Kernteil (21) besteht.

5. Abwassersammeischacht nach einem der Ansprüche 1 bis 4, **dadurch gekennzeichnet, dass** das Wellrohr, insbesondere Wendelwellrohr (20), mit einer Beschichtung oder Umhüllung, insbesondere zum Schutz vor Korrosion und/oder dem Anhaften von Feststoffen, versehen ist.

6. Abwassersammelschacht nach einem der Ansprüche 1 bis 5, **dadurch gekennzeichnet, dass** der Wärmetauscher (14) patronenförmig ausgeführt ist, wobei Anschlüsse für das Wärmeträgermedium an einem Ende des Wärmetauschers (14) vorgesehen sind.

7. Abwassersammelschacht nach einem der Ansprüche 1 bis 6, **dadurch gekennzeichnet, dass** mindestens ein Mittel zur vereinfachten Montage und Wartung des Wärmetauschers (14) vorgesehen ist.

8. Abwassersammelschacht nach Anspruch 7, **dadurch gekennzeichnet, dass** das Mittel zur vereinfachten Montage und Wartung (11) des Wärmetauschers (14) durch mindestens eine der Versorgungsleitungen (17, 18) des Wärmetauschers (14) ausgebildet ist.

9. Abwassersammelschacht nach einem der Ansprüche 1 bis 8, **dadurch gekennzeichnet, dass** mindestens eine der Versorgungsleitungen (17, 18) des Wärmetauschers (14) mit einer thermischen Isolierung versehen ist.

10. Abwassersammelschacht nach einem der Ansprüche 1 bis 9, **dadurch gekennzeichnet, dass** eine Überwachung des Abwassers durch Füllstands- und/oder Temperatursensoren (9) erfolgt.

11. Abwassersammelschacht nach einem der Ansprüche 1 bis 10, **dadurch gekennzeichnet, dass** eine regelnde Einrichtung zur Auswertung der Sensorsignale und/oder Betätigung der Tauchmotorpumpe (7) vorgesehen ist.

12. Abwassersammelschacht nach einem der vorgenannten Ansprüche, **dadurch gekennzeichnet, dass** die Vorrichtung zur Rückgewinnung der Restwärme des Abwassers für einen vorhandenen Abwassersammelbehälter nachrüstbar ist.

13. Abwassersammelschacht nach einem der Ansprüche 1 bis 11, **dadurch gekennzeichnet, dass** die Verankerung (11) und die Abstandhalter (13) in die Innenwand des Behälters integriert sind.

14. Verfahren zur Wärmerückgewinnung mit einem Abwassersammelschacht nach einem der oben genannten Ansprüche, **dadurch gekennzeichnet, dass** der Füllstand des Abwassers im Behälter mit einem Sensor (9) gemessen und der regelnden Einrichtung zugeführt wird, von der regelnden Einrichtung bei ausreichend hohem Füllstand das Wärmeträgermedium durch den Wärmetauscher (14) geleitet wird, und bei Unterschreiten eines Minimalfüllstandes der Betrieb des Wärmetauschers (14) von der regelnden Einrichtung abgeschaltet wird.

15. Verfahren zur Wärmerückgewinnung nach Anspruch 14, **dadurch gekennzeichnet, dass** die Temperatur des Abwassers im Behälter mit einem Sensor (9) gemessen und der regelnden Einrichtung zugeführt wird, von der regelnden Einrichtung bei ausreichend hoher Temperatur der Betrieb des Wärmetauschers (14) eingeschaltet wird, oder, bei Unterschreiten einer Mindesttemperatur der Betrieb des Wärmetauschers (14) von der regelnden Einrichtung abgeschaltet wird.

## Claims

1. Wastewater-collection pit having at least one inflow (3), which is located in particular below the backflow level, having a lifting device, in particular a submersible motor pump (7), arranged therein, having at least one discharge line, in particular a pressure line (5), having a device which regulates the filling level of the wastewater located in the wastewater-collection pit, and having means (8) for simplified installation and maintenance of the units which influence the wastewater, wherein a unit for recovering the residual heat from the wastewater is provided within the wastewater-collection pit, wherein at least one heat exchanger (14) is provided in the region below a predetermined maximum filling level, and wherein retaining means arranged above the maximum filling level retain the heat exchanger or exchangers (14), **characterized in that** the retaining means have an anchoring arrangement (11), which is provided on the inner wall of the wastewater-collection pit and can be fastened on the heat exchanger (14) by means of a releasable connection (19).

2. Wastewater-collection pit according to Claim 1, **characterized in that** a heat-transfer medium is provided in the heat exchanger (14).

3. Wastewater-collection pit according to either of Claims 1 and 2, **characterized in that** the heat-transfer medium is fed to a heat pump.

4. Wastewater-collection pit according to one of Claims 1 to 3, **characterized in that** the heat exchanger (14) comprises a composite part made up of at least one corrugated tube, in particular a corrugated spiral tube (20), and a pushed-in core part (21).

5. Wastewater-collection pit according to one of Claims 1 to 4, **characterized in that** the corrugated tube, in particular corrugated spiral tube (20), is provided with a coating or casing, in particular for protection against corrosion and/or against the adhesion of solids.

6. Wastewater-collection pit according to one of Claims 1 to 5, **characterized in that** the heat exchanger (14) is designed in the form of a cartridge, wherein connections for the heat-transfer medium are provided at one end of the heat exchanger (14).

7. Wastewater-collection pit according to one of Claims 1 to 6, **characterized by** the provision of at least one means for the simplified installation and maintenance of the heat exchanger (14).

8. Wastewater-collection pit according to Claim 7, **characterized in that** the means for the simplified installation and maintenance (11) of the heat exchanger (14) is formed by at least one of the supply lines (17, 18) of the heat exchanger (14).

9. Wastewater-collection pit according to one of Claims 1 to 8, **characterized in that** at least one of the supply lines (17, 18) of the heat exchanger (14) is provided with thermal insulation.

10. Wastewater-collection pit according to one of Claims 1 to 9, **characterized in that** the wastewater is monitored by filling-level and/or temperature sensors (9).

11. Wastewater-collection pit according to one of Claims 1 to 10, **characterized by** the provision of a regulating device for evaluating the sensor signals and/or actuation of the submersible motor pump (7).

12. Wastewater-collection pit according to one of the preceding claims, **characterized in that** the unit for recovering the residual heat from the wastewater can be retrofitted for an existing wastewater-collection tank.

13. Wastewater-collection pit according to one of Claims 1 to 11, **characterized in that** the anchoring arrangement (11) and the spacers (13) are integrated in the inner wall of the tank.

14. Method of recovering heat by way of a wastewater-collection pit according to one of the preceding claims, **characterized in that** the filling level of the wastewater in the tank is measured by a sensor (9) and is fed to the regulating device, and, in the case of a sufficiently high filling level, the heat-transfer medium is directed through the heat exchanger (14) by the regulating device and, in the case of the filling level falling below a minimum value, the operation of the heat exchanger (14) is switched off by the regulating device.

15. Method of recovering heat according to Claim 14, **characterized in that** the temperature of the wastewater in the tank is measured by a sensor (9) and is fed to the regulating device and, in the case of a sufficiently high temperature, the operation of the heat exchanger (14) is switched on by the regulating device or, in the case of the temperature falling below a minimum value, the operation of the heat exchanger (14) is switched off by the regulating device.

## Revendications

1. Puits de collecte d'eau usée présentant au moins une amenée (3) disposée en particulier en dessous du niveau de reflux et dans lequel est disposé un dispositif de relèvement, en particulier une pompe immergée (7) à moteur présentant au moins un conduit d'évacuation, en particulier un conduit sous pression (5), et un dispositif qui régule le niveau de remplissage de l'eau usée présente dans le puits de collecte d'eau usée ainsi que des moyens (8) qui facilitent le montage et l'entretien des ensembles qui agissent sur l'eau usée,
un ensemble de récupération de la chaleur résiduelle de l'eau usée étant prévu à l'intérieur du puits de collecte d'eau usée,
au moins un échangeur de chaleur (14) étant prévu dans la partie située en dessous d'un niveau de remplissage maximum prédéterminé, des moyens de maintien disposés au-dessus du niveau de remplissage maximum retenant le ou les échangeurs de chaleur (14), **caractérisé en ce que**
les moyens de maintien présentent un ancrage (11) prévu sur la paroi intérieure du puits de collecte d'eau usée et sur lequel l'échangeur de chaleur (14) peut être fixé au moyen d'une liaison libérable (19).

2. Puits de collecte d'eau usée selon la revendication 1, **caractérisé en ce qu'**un fluide caloporteur est prévu dans l'échangeur de chaleur (14).

3. Puits de collecte d'eau usée selon l'une des revendications 1 ou 2, **caractérisé en ce que** le fluide caloporteur est amené au moyen d'une pompe à chaleur.

4. Puits de collecte d'eau usée selon l'une des revendications 1 à 3, **caractérisé en ce que** l'échangeur de chaleur (14) est constitué d'une pièce composite constituée d'un tube ondulé et en particulier d'un tube ondulé (20) en spirale dans lequel est insérée une partie d'âme (21).

5. Puits de collecte d'eau usée selon l'une des revendications 1 à 4, **caractérisé en ce que** le tube ondulé, en particulier le tube ondulé (20) en spirale, est doté d'un revêtement ou d'une enveloppe, en particulier pour le protéger de la corrosion et/ou contre l'adhérence de solides.

6. Puits de collecte d'eau usée selon l'une des revendications 1 à 5, **caractérisé en ce que** l'échangeur de chaleur (14) est réalisé sous la forme d'une cartouche, des raccordements pour le fluide caloporteur étant prévus à une extrémité de l'échangeur de chaleur (14).

7. Puits de collecte d'eau usée selon l'une des revendications 1 à 6, **caractérisé en ce qu'**au moins un moyen facilitant le montage et l'entretien de l'échangeur de chaleur (14) est prévu.

8. Puits de collecte d'eau usée selon la revendication 7, **caractérisé en ce que** le moyen simplifiant le montage et l'entretien (11) de l'échangeur de chaleur (14) est formé d'au moins l'un des conduits (17, 18) qui alimente l'échangeur de chaleur (14).

9. Puits de collecte d'eau usée selon l'une des revendications 1 à 8, **caractérisé en ce qu'**au moins l'un des conduits d'alimentation (17, 18) de l'échangeur de chaleur (14) est doté d'une isolation thermique.

10. Puits de collecte d'eau usée selon l'une des revendications 1 à 9, **caractérisé en ce que** la surveillance de l'eau usée s'effectue par des capteurs (9) de niveau et/ou de température.

11. Puits de collecte d'eau usée selon l'une des revendications 1 à 10, **caractérisé en ce qu'**un dispositif de régulation qui évalue les signaux de capteur et/ou actionne la pompe immergée (17) à moteur est prévu.

12. Puits de collecte d'eau usée selon l'une des revendications précédentes, **caractérisé en ce que** l'ensemble de récupération de la chaleur résiduelle de l'eau usée peut être installé dans un récipient existant de collecte d'eau usée.

13. Puits de collecte d'eau usée selon l'une des revendications 1 à 11, **caractérisé en ce que** l'ancrage (11) et l'écarteur (13) sont intégrés dans la paroi intérieure du récipient.

14. Procédé de récupération de chaleur à l'aide d'un puits de collecte d'eau usée selon l'une des revendications précédentes, **caractérisé en ce que** le niveau de l'eau usée dans le récipient est mesuré à l'aide d'un capteur (9) et est amené au dispositif de régulation, que l'eau usée est amenée à traverser l'échangeur de chaleur (14) par le dispositif de régulation lorsque le niveau de fluide caloporteur est suffisant et lorsqu'un niveau minimum de remplissage n'est pas atteint, le fonctionnement de l'échangeur de chaleur (14) est interrompu par le dispositif de régulation.

15. Procédé de récupération de chaleur selon la revendication 14, **caractérisé en ce que** la température de l'eau usée présente dans le récipient est mesurée à l'aide d'un capteur (9) et est amenée au dispositif de régulation, le fonctionnement de l'échangeur de chaleur (14) étant lancé par le dispositif de régulation lorsque la température est suffisamment élevée et le fonctionnement de l'échangeur de chaleur (14) est débranché par le dispositif de régulation lorsqu'une température minimum n'est plus atteinte.
